# EUROPÄISCHE PATENTANMELDUNG

(11) **EP 0 558 978 A1**
(43) Veröffentlichungstag der Anmeldung: **08.09.1993**
(21) Anmeldenummer: 93102281.8
(22) Anmeldetag: 13.02.1993
(51) Int. Cl.: G01K 13/08

(54) **Reibradgetriebe**

(30) Priorität: 29.02.1992 DE 4206391
(71) Anmelder: STÖBER ANTRIEBSTECHNIK GmbH & Co., D-75177 Pforzheim (DE)
(72) Erfinder: Bacher, Herbert, W-7542 Schömberg (DE)
(74) Vertreter: Kohl, Karl-Heinz

(57) **Zusammenfassung**

Das Reibradgetriebe hat einen Reibkegel (4) und einen mit ihm in Reibkontakt befindlichen Laufring (6).

Um beim Betrieb eine unzulässig hohe Erwärmung der Reibpartner (4, 6) sicher festzustellen, ist mindestens einer der Reibpartner (4, 6) mit wenigstens einem Signalgeber (14) versehen, der die Temperatur am entsprechenden Reibkontaktbereich erfaßt und dem ein Sensor (21) zugeordnet ist. Mit dem Signalgeber (14) kann auf konstruktiv einfache Weise angezeigt werden, wenn eine bestimmte zulässige Temperatur im Reibkontaktbereich überschritten wird. Das Reibradgetriebe eignet sich zur Verwendung in explosionsgeschützten Räumen.

## Beschreibung

Die Erfindung betrifft ein Reibradgetriebe nach dem Oberbegriff des Anspruches 1.

Bei bekannten Reibradgetrieben dieser Art hat der Laufring stirnseitig einen Reibring, mit dem er an der Stirnfläche des Reibkegels anliegt. Da der Laufring mit seiner Getriebewelle durch den Reibring drehend angetrieben wird, erhitzt sich der Reibring während des Betriebes relativ stark. Solche Reibradgetriebe werden in zunehmendem Maße in explosionsgeschützten Räumen eingesetzt. Da die Reibradgetriebe keine geschlossenen Gehäuse haben, können explosive Dämpfe an die Reibpartner gelangen, so daß bei höheren Temperaturen Explosionsgefahr besteht.

Der Erfindung liegt die Aufgabe zugrunde, ein Reibradgetriebe dieser Art so auszubilden, daß die Gefahr einer Explosion bei Verwendung in explosionsgeschützten Räumen sicher vermieden ist.

Diese Aufgabe wird bei einem Reibradgetriebe der gattungsbildenden Art erfindungsgemäß mit den kennzeichnenden Merkmalen des Anspruches 1 gelöst.

Infolge des Signalgebers kann auf konstruktiv einfache Weise angezeigt werden, wenn eine bestimmte zulässige Temperatur im Reibkontaktbereich überschritten wird. Der Signalgeber gibt bei Überschreiten dieser maximal zulässigen Temperatur ein Signal, das vom Sensor erfaßt wird, wodurch zum Beispiel ein Alarm oder ein Abschalten des Getriebes ausgelöst werden kann. Die Gefahr einer eventuellen Explosion läßt sich einwandfrei vermeiden. Mit dem Sensor ist auch ein Blockierschutz bzw. eine Blockierschutzüberwachung möglich. Tritt eine Blockierung auf, drehen die Reibpartner nicht mehr, so daß Impulse bzw. Signale nicht mehr auftreten. Der Sensor gibt dann ein entsprechendes Signal. Es kann ein Warnsignal sein, das den Benutzer auf die Blockierung aufmerksam macht. Es kann aber auch zum automatischen Abschalten des Reibradgetriebes herangezogen werden.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher erläutert. Es zeigt:
- Fig. 1: einen Teil eines erfindungsgemäßen Reibradgetriebes, teilweise im Axialschnitt,
- Fig. 2: in einem Diagramm die Permeabilität eines ferritischen Teilstückes eines Signalgebers des erfindungsgemäßen Reibradgetriebes in Abhängigkeit von der Temperatur,
- Fig. 3: in schematischer Darstellung die Magnetfeldlinien des Signalgebers des erfindungsgemäßen Reibradgetriebes bei einer Temperatur oberhalb der Curie-Temperatur,
- Fig. 4: die Magnetfeldlinien des Signalgebers bei einer Temperatur unterhalb der Curie-Temperatur.

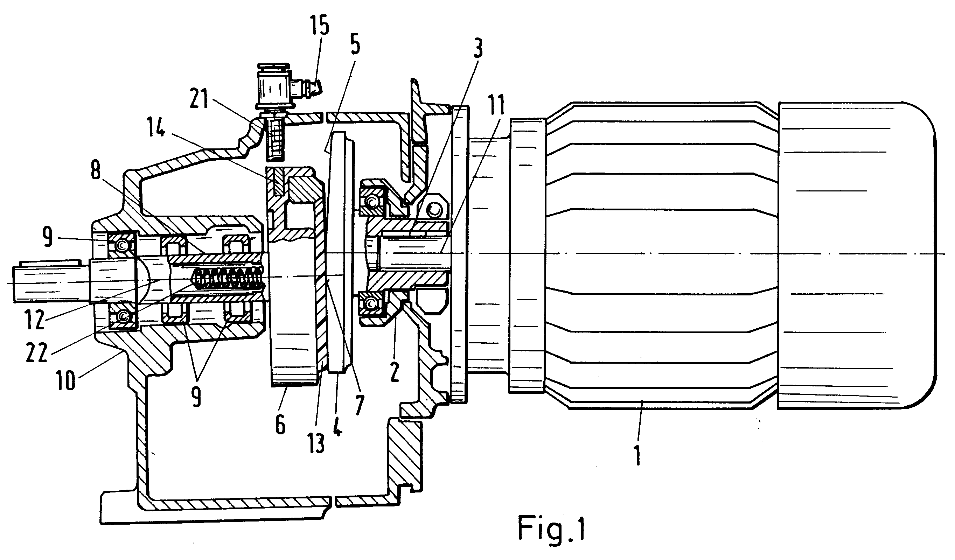

Das Reibradgetriebe gemäß Fig. 1 hat einen in einem Motorgehäuse 1 untergebrachten (nicht dargestellten) Motor, dessen Motorwelle 2 im Gehäuse drehbar gelagert ist. Auf der Motorwelle sitzt mit einer Nabe 3 drehfest ein Reibkegel 4, der eine Kegelfläche 5 hat. An ihr liegt ein zylindrischer Laufring 6 mit seiner Stirnfläche 7 an. Der Laufring 6 sitzt drehfest auf einer Getriebewelle 8, die mit Wälzlagern 9 in einem Getriebegehäuse 10 abgestützt ist. Mit der Motorwelle 2 wird der Reibkegel drehbar angetrieben. Dieser treibt den Laufring 6 und damit die aus dem Getriebegehäuse 10 ragende Getriebewelle 8 infolge der gegenseitigen Anlage drehend an. Die Achse 11 der Motorwelle 2 und die Achse 12 der Getriebewelle 8 schließen einen kleinen Winkel miteinander ein.

Die ebene Stirnfläche 7 des Laufringes 6 ist durch einen Reibring 13 gebildet, der in einer Ringnut des Laufringes liegt. Der Reibring 13 besteht vorzugsweise aus Graphit oder einem anderen wärmeleitfähigen Material. Um das Übersetzungsverhältnis zwischen Motorwelle 2 und Getriebewelle 8 ändern zu können, lassen sich der Reibkegel 4 bzw. der Laufring 6 quer zu ihrer Achse relativ zueinander verstellen. Der Laufring 6 steht unter der Kraft einer Druckfeder 22, durch die er gegen den Reibkegel 4 gedrückt wird.

Infolge der Reibung zwischen Reibkegel 4 und Reibring 13 kommt es an der Berührungsstelle zu einer Erwärmung. Wird das Reibradgetriebe in explosionsgeschützten Räumen eingesetzt, könnten die explosiven Dämpfe infolge des nicht geschlossenen Getriebegehäuses 10 an die erwärmten Reibpartner 4, 13 gelangen und sich dort bei entsprechend hoher Temperatur entzünden.

Um dies zu verhindern, ist unmittelbar benachbart zum Reibring 13 mindestens ein Temperatur-Signalgeber 14 im Laufring 6 angeordnet. Er ist dicht benachbart zum Reibring 13 in einer radialen Sacklochbohrung des Laufringes 6 angeordnet.

Der Temperatur-Signalgeber 14 hat ein Teilstück 16 aus ferritischem Material mit einem definierten Curie-Punkt T_{c}. Dieses Teil 16 ist auf einem Permanentmagneten 17, einen anderen Teil des Signalgebers 14, angeordnet. Beide Teile 16, 17 sind in einer napfförmigen Hülse 19 aus nicht magnetischem Material untergebracht, die vorzugsweise aus Aluminium besteht. Der Signalgeber 14 ist so im Laufring 6 vorgesehen, daß das ferritische Teil 16, dessen Stirnseite 23 bündig mit dem freien Ende der Hülse 19 liegt, radial außen angeordnet ist, während der Permanentmagnet 17 radial innen liegt. Das Teil 16 steht vorteilhaft nicht radial über den Laufring 6 vor. Das Material des Teiles 16 wird so gewählt, daß seine Curie-Temperatur T_{c} an den vorgesehenen Einsatzfall des Reibradgetriebes angepaßt ist.

Im Getriebegehäuse 10 ist ein Sensor 21 vorgesehen, an dem der Signalgeber 14 im Einsatz des Reibradgetriebes vorbeibewegt wird. Das Magnetfeld des Signalgebers 14 erzeugt bei jeder Umdrehung des Laufringes 6 im Sensor 21 einen Spannungsimpuls, der über eine Leitung 15 einer (nicht dargestellten) Auswerteeinheit zugeführt wird. Der Sensor 21 ist ein induktiver Näherungsschalter, der auf das Magnetfeld des Signalgebers 14 anspricht.

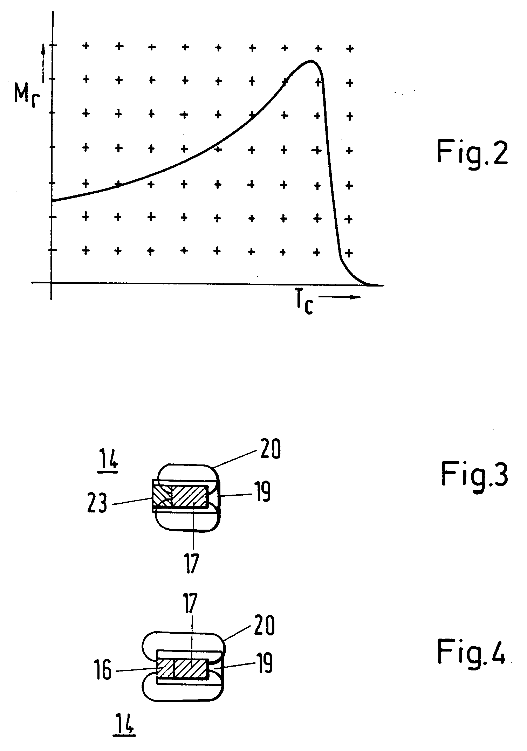

Haben sich die Reibpartner 4, 6 des Reibradgetriebes noch nicht stark erwärmt, das heißt, liegt die Betriebstemperatur des Laufringes 6 unterhalb der Curie-Temperatur T_{c} des ferritischen Teiles 16, ergibt sich ein Verlauf der Magnetfeldlinien 20, wie er in Fig. 4 schematisch dargestellt ist. Durch dieses Magnetfeld wird der Sensor 21 bei jeder Umdrehung des Laufringes 6 erregt, der dann entsprechende Impulse erzeugt. Solange diese Impulse erzeugt werden, ist dies ein Hinweis darauf, daß sich die Reibpartner noch nicht unzulässig hoch erhitzt haben. Steigt die Betriebstemperatur des Reibringes 13 bzw. des Laufringes 6 über die kritische Temperatur, die der Curie-Temperatur T_{c} des ferritischen Teils 16 entspricht, dann nimmt die Permeabilität Ì des Teiles 16 bis auf den Wert null ab. Diese Zusammenhänge sind in Fig. 2 dargestellt.

Hier ist die Permeabilität Ì eines ferritischen Materials gegen die Temperatur aufgetragen. Bis zur Curie-Temperatur T_{c} steigt die Permeabilität Ì des Ferrits an. Bei Erreichen des Curie-Punktes T_{c} ist das Maximum der Permeabilität erreicht. Sobald die Curie-Temperatur T_{c} überschritten wird, fällt die Permeabilität Ì sehr rasch auf null ab. Dies hat zur Folge, daß die Magnetfeldlinien 20 des Signalgebers 14, die vom Permanentmagneten 17 ausgehen, oberhalb der Curie-Temperatur T_{c} abgeschwächt werden (Fig. 3). Der Sensor 21 wird dadurch nicht mehr erregt, so daß am Auswertegerät Spannungsimpulse ausbleiben. Das Auswertegerät erzeugt dann entsprechende Signale, um beispielsweise das Reibradgetriebe bzw. den Motor 1 abzuschalten oder ein Warnsignal zu erzeugen.

Auf diese Weise ist sichergestellt, daß eine unzulässig hohe Erwärmung der Reibpartner 4, 6, 13 zuverlässig erkannt und angezeigt wird. Der Signalgeber 14 ist so im Laufring 6 vorgesehen, daß er nur einen so kleinen Abstand wie möglich vom Reibring 13 hat, um die Erwärmung des Reibringes genau feststellen zu können. Der Sensor kann sogar in einer radialen Bohrung untergebracht sein, die auch den Reibring 13 durchbohrt. Das Material des ferritischen Teiles 16 wird so gewählt, daß die Curie-Temperatur T_{c}, das heißt, der Ansprechwert des Sensors 21, in einem Temperaturbereich liegt, in dem eine Gefährdung ausgeschlossen ist. Wird das Reibradgetriebe beispielsweise in explosionsgeschützten Räumen eingesetzt, wird ein Material mit einem Curie-Punkt T_{c} gewählt, der unterhalb der Temperatur liegt, bei der sich die explosiven Dämpfe bzw. Gase entzünden können.

Der Signalgeber 14 kann auch oder zusätzlich im Reibkegel 4 nahe dessen Reibfläche vorgesehen sein, so daß auch dessen Erhitzung in der beschriebenen Weise festgestellt werden kann.

## Patentansprüche

1. Reibradgetriebe mit wenigstens zwei Getrieberädern, nämlich einem Reibkegel und einem mit ihm in Reibkontakt befindlichen Laufring,
dadurch gekennzeichnet, daß zumindest eines der Getrieberäder (4, 6) mit wenigstens einem Signalgeber (14) versehen ist, der die Temperatur am entsprechenden Reibkontaktbereich erfaßt und dem ein Sensor (21) zugeordnet ist.

2. Reibradgetriebe nach Anspruch 1, dadurch gekennzeichnet, daR der Signalgeber (14) mit kleinstmöglichem Abstand zum Reibkontaktbereich im Laufring (6) angeordnet ist.

3. Reibradgetriebe nach Anspruch 1 oder 2, dadurch gekennzeichnet, daß der Signalgeber (14) magnetisch ausgebildet ist.

4. Reibradgetriebe nach einem der Ansprüche 1 bis 3, dadurch gekennzeichnet, daß der Signalgeber (14) in seinem aktiven Teil aus zwei Teilen (16 und 17) besteht, die aus unterschiedlichen Werkstoffen bestehen.

5. Reibradgetriebe nach Anspruch 4, dadurch gekennzeichnet, daß das eine, dem Sensor (21) zugewandte Teil (16) des Signalgebers (14) aus ferritischem Material besteht.

6. Reibradgetriebe nach Anspruch 4 oder 5, dadurch gekennzeichnet, daß das andere Teil (17) ein Permanentmagnet ist.

7. Reibradgetriebe nach einem der Ansprüche 4 bis 6, dadurch gekennzeichnet, daß das ferritische Teil (16) des Signalgebers (14) aus einem Material mit definiertem Curie-Punkt (T_{c}) besteht.

8. Reibradgetriebe nach einem der Ansprüche 5 bis 7, dadurch gekennzeichnet, daß das ferritische Teil (16) und der Permanentmagnet (17) aneinanderliegen.

9. Reibradgetriebe nach einem der Ansprüche 1 bis 8, dadurch gekennzeichnet, daß der Sensor (21) auf das Magnetfeld des Signalgebers (14) anspricht.

10. Reibradgetriebe nach einem der Ansprüche 1 bis 9, dadurch gekennzeichnet, daß der Sensor (21) ein induktiver Näherungsschalter ist.

11. Reibradgetriebe nach einem der Ansprüche 1 bis 10, dadurch gekennzeichnet, daß der Sensor (21) an ein Auswertegerät angeschlossen ist.

12. Reibradgetriebe nach einem der Ansprüche 1 bis 11, dadurch gekennzeichnet, daß der Signalgeber (14) in einer etwa radial verlaufenden Öffnung des Laufringes (6) liegt.
